# EUROPEAN PATENT APPLICATION

(11) **EP 2 765 688 A2**
(43) Date of publication of application: **13.08.2014**
(21) Application number: 14154185.4
(22) Date of filing: 06.02.2014
(51) Int. Cl.: H02K 11/04

(54) **Coaxial rotating rectifier package assembly for generator**

(30) Priority: 11.02.2013 US 201313764146
(71) Applicant: Hamilton Sundstrand Corporation, Windsor Locks, CT 06096-1010 (US)
(72) Inventor: Brust, Eric A., Machesney Park, IL Illinois 61115 (US); Martin, Ted A., Byron, IL Illinois 61010 (US); Patel, Dhaval, Loves Park, IL Illinois 61111 (US)
(74) Representative: Leckey, David Herbert

(57) **Abstract**

A rotating rectifier assembly (400) for a generator has a diode pack (402) and a connection block (404) configured to provide electrical connections to the diode pack (402). The diode pack (402) includes an inner DC ring (414), an outer DC ring (410) and a plurality radially stacked diode pairs disposed between the inner DC ring (414) and the outer DC ring (410). The diode pack (402) also includes one or more diode connection plates (420) disposed between each of the one or more radially stacked pair of diodes. The diode pack (402) also includes one or more DC posts (418) affixed to the inner DC ring (414) and one or more AC posts (416) affixed to the one or more diode connection plates (420). The connection block (404) is configured to receive the one or more AC posts (416) and one or more DC posts (418).

## Description

### BACKGROUND OF THE INVENTION

The present disclosure relates to the field of generators, and more specifically, to a coaxial rotating rectifier assembly for a three stage wound field synchronous generator.

A three stage wound field synchronous generator includes an exciter and a main machine. Both exciter and main machine include a stator fixed relative to a housing and a rotor rotatable about an axis relative to the stators. The rotor includes a rotor frame carrying a rotating circuit that includes a main field, an exciter armature and a rectifier assembly, which has diodes. While rotating, DC voltage is applied to the exciter stator (field), which is converted into AC voltage by the exciter armature. The AC voltage is then applied to the rectifier assembly, which converts the AC voltage into DC voltage, which is applied to the main field. The main field is magnetized by the DC voltage, and while rotating relative to the main stator, induces current in the main stator to produce power.

Generators can experience rectifier assembly failures due to damaged diodes. One failure mode results from an electrical static discharge event from the rotor frame to the isolated rotor circuit. Typically, the rotor frame has an opening through which a bus bar extends. The bus bar, which is electrically connected to the rotor circuit, is electrically insulated from the rotor frame with an insulator.

Currently available generators include radial diode packages that include two DC rings placed side by side along the radius of rotor. Each of the two DC rings includes multiple diodes. Accordingly, the current design requires the use of buss bars and fasteners to make connections between the two adjacent DC rings.

### BRIEF DESCRIPTION OF THE INVENTION

According to one embodiment, a rotating rectifier assembly for a generator includes a diode pack having an inner DC ring, an outer DC ring, and a plurality of diodes disposed between the inner DC ring and the outer DC ring, wherein the plurality of diodes are disposed in one or more radially stacked pairs. The diode pack also includes one or more diode connection plates disposed between each of the one or more radially stacked pair of diodes, one or more DC posts affixed to the inner DC ring, and one or more AC posts affixed to the one or more diode connection plates. The rotating rectifier assembly also includes a connection block configured to receive the one or more DC posts and one or more AC posts and provide electrical connections to the diode pack.

Accordingly to another embodiment, a diode pack having an inner DC ring, an outer DC ring, and a plurality of diodes disposed between the inner DC ring and the outer DC ring, wherein the plurality of diodes are disposed in one or more radially stacked pairs. The diode pack also includes one or more diode connection plates disposed between each of the one or more radially stacked pair of diodes, one or more DC posts affixed to the inner DC ring, and one or more AC posts affixed to the one or more diode connection plates.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross sectional view of a generator rotor in accordance with an embodiment of the disclosure;
FIG. 2A is a cross sectional view of a diode pack in accordance with an embodiment of the disclosure;
FIG. 2B is a top view of a diode pack in accordance with an embodiment of the disclosure;
FIG. 2C is a bottom view a diode pack in accordance with an embodiment of the disclosure;
FIG. 3A is a perspective view of a connection block in accordance with an embodiment of the disclosure;
FIG. 3B is a top view of a connection block in accordance with an embodiment of the disclosure;
FIG. 3C is a cross sectional view of a connection block in accordance with an embodiment of the disclosure; and
FIG. 4 is a cross sectional view of a rectifier assembly in accordance with an embodiment of the disclosure.

### DETAILED DESCRIPTION OF THE INVENTION

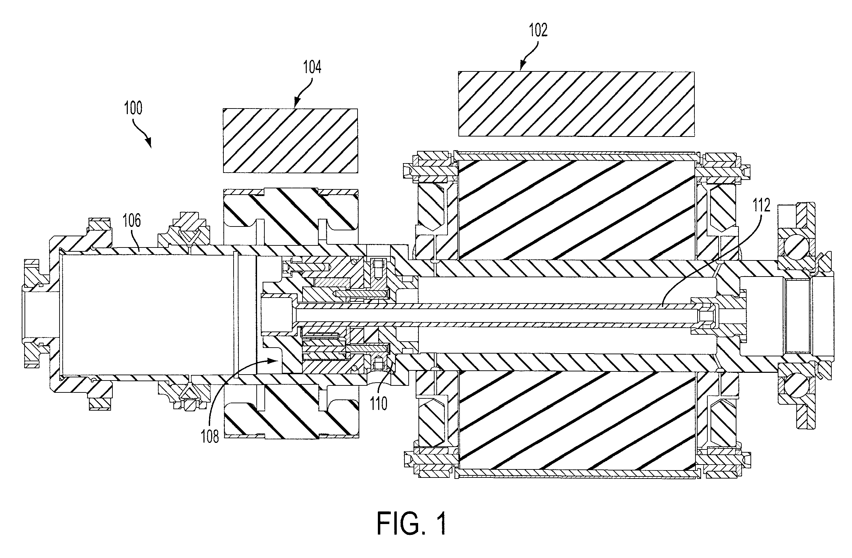

Referring now to Figure 1, a generator 100 in accordance with an one embodiment is shown. The generator 100 includes a main field stator 102 and exciter 104 both of which are disposed around a rotor assembly 106. The rotor assembly 106 includes a diode pack 108 and a diode connection block 110. In one embodiment, the diode pack 108 is installed in the entire rotor assembly 106 which is configured to rotate inside of the exciter 104 and main field stator 102.

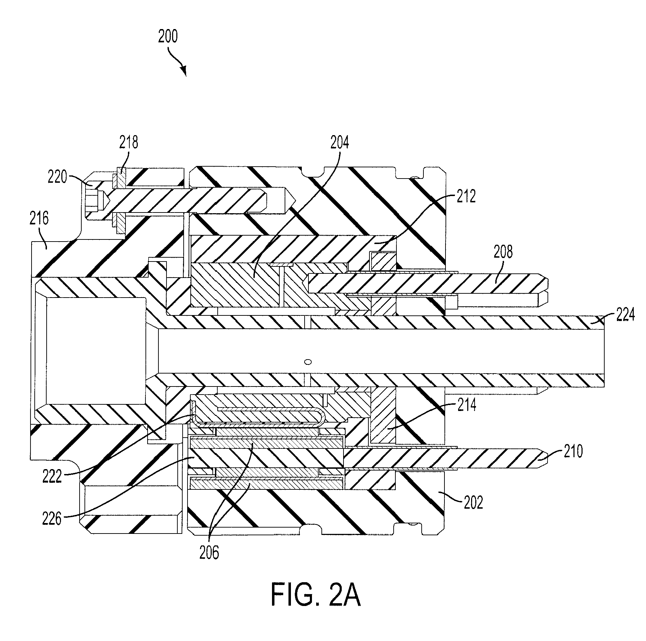

Referring now to FIG. 2A a diode pack 200 in accordance with one embodiment is shown. The diode pack 200 includes an outer DC ring 202 and inner DC ring 204 which are coaxially disposed about a central oil tube 224 and inside the rotor shaft 106. In one embodiment, the outer DC ring 202 is in direct contact with the shaft for static grounding. The outer DC ring 202 and the inner DC ring 204 are separated by spacer 212 and by a ceramic resistor disk 214. The diode pack 200 also includes a cover 216 that is affixed to the outer DC ring 202 by a plurality of bolts 220 and washers 218.

In one embodiment, the diode pack 200 also includes a plurality of diodes 206 which are disposed between the outer DC ring 202 and the inner DC ring 204. In one embodiment, the diode pack 200 includes three pairs of radially stacked diodes 206 and a diode connection plate 226 disposed between each of the pairs of radially stacked diodes 206. The diode connection plates 226 are each affixed to an AC post 210. The diode pack 200 includes one or more DC posts 208 which are affixed to the inner DC ring 204 and outer DC ring 202. In one embodiment, the diodes 206 and plates 226 may be held in place by a spring clip 222.

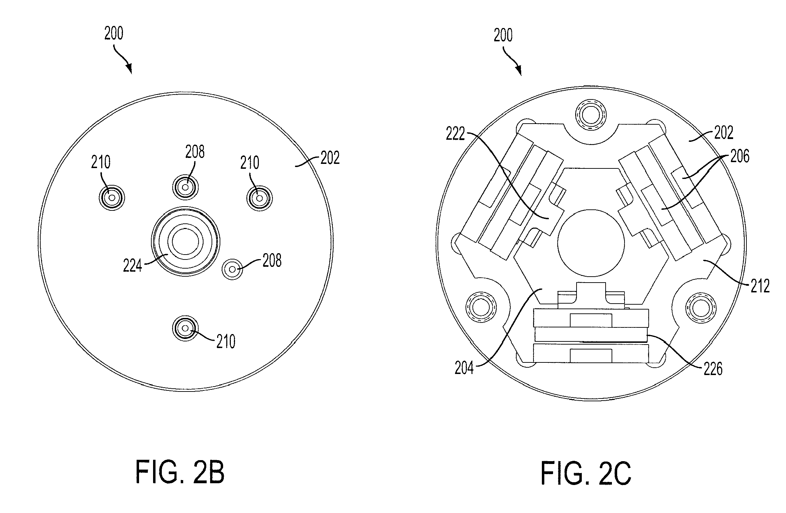

Referring now to FIG. 2B a top view of a diode pack 200 in accordance with one embodiment is shown. As illustrated the diode pack 200 includes three AC posts 210 and two DC posts 208 which extend from one end of the diode pack 200 in the direction of the central oil tube 224.

Referring now to FIG. 2C a bottom view a diode pack 200 without the cover 216 in accordance with one embodiment is shown. As illustrated the diode pack 200 includes three pairs of diodes 206 which are each separated by a diode connection plate 226. The diode pack 200 includes an inner DC ring 204 and an outer DC ring 202, which are separated by a spacer 212.

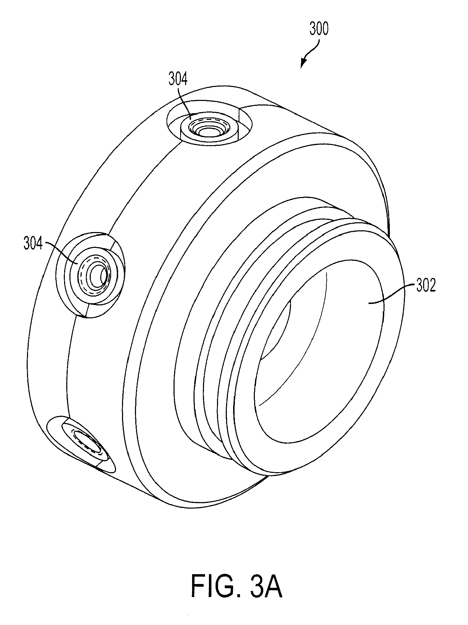

Referring now to FIG. 3A a connection block 300 in accordance with one embodiment is shown. The connection block 300 is configured to attach the end of the diode pack shown in FIG. 2B. In one embodiment, the connection block 300 is designed to receive the AC posts and DC posts from the diode pack and to provide connections 304 to the AC posts and DC posts. The connection block 300 also includes an aperture 302 configured to receive the oil tube.

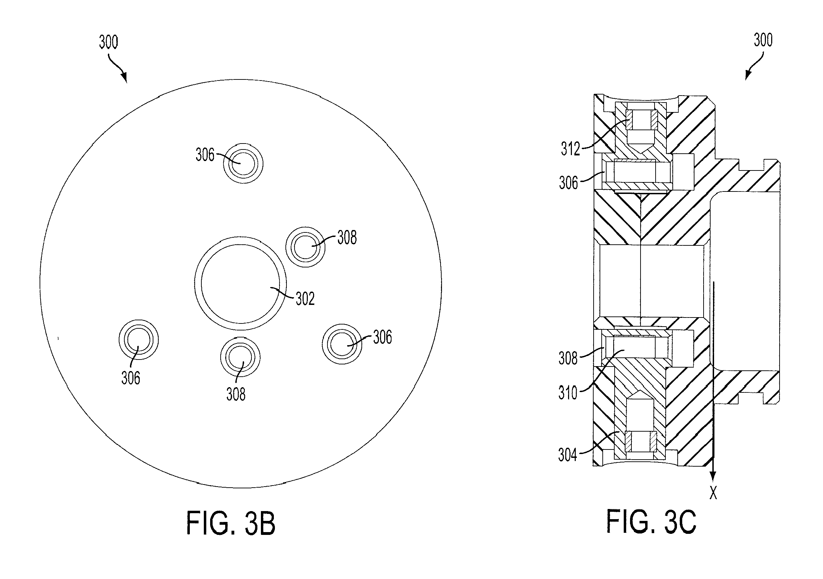

Referring now to FIG. 3B a top view of a connection block 300 in accordance with one embodiment is shown. The end of the connection block 300 shown is configured to attach the end of the diode pack shown in FIG. 2B. In one embodiment, the connection block 300 is designed to receive the AC posts of the diode pack in AC connectors 306 and DC posts of the diode pack in DC connectors 308. The connection block 300 also includes an aperture 302 configured to receive the oil tube.

Referring now to FIG. 3C a cross sectional view of a connection block 300 in accordance with one embodiment is shown. In one embodiment, the connection block 300 is designed to receive the AC posts of the diode pack in AC connectors 306 and DC posts of the diode pack in DC connectors 308. Both the AC connectors 306 and DC connectors 308 include a powerband 310 configured to fittingly receive an AC post or DC post from the diode pack. The terminals 304 also include a threaded portion, or helicoil, 312 which is configured to receive a bolt or other attachment means.

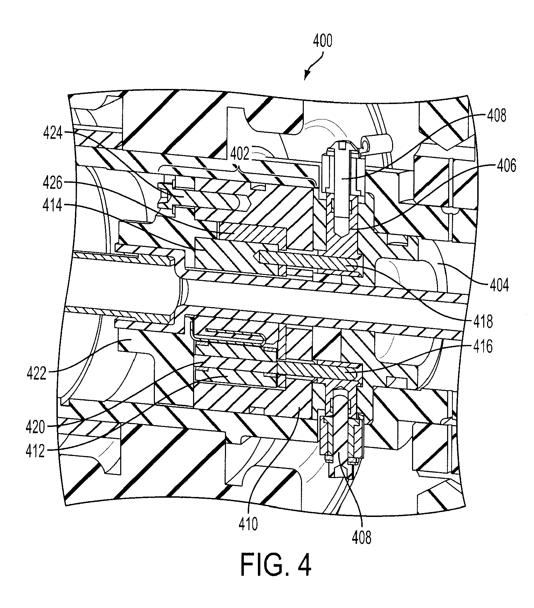

Referring now to FIG. 4 a cross sectional view of a portion of a rectifier assembly 400 in accordance with an embodiment of the disclosure is shown. The rectifier assembly 400 includes a diode pack 402 and a connection block 404. The connection block 404 includes a plurality of terminals 406 that are configured to receive bolts 408, which secure the connection block 404 to the rectifier rotor assembly 400 and provide electrical connections to the diode pack 402. The diode pack 402 includes an outer DC ring 410 and an inner DC ring 414 and a plurality of diodes 412 disposed between the rings. In one embodiment, the diodes 412 are disposed in radially stacked pairs with a diode connection plate 420 disposed between each pair of diodes. One or more of the diode connections plates 420 are in electrical communication with an AC post 416. The diode pack 402 also includes one or more DC posts 418 that are in electrical communication with the inner DC ring 414 and outer DC ring 410. In one embodiment, the inner DC ring 414 and outer DC ring 410 are separated by an insulator 426. The diode pack 402 also includes a cover 422 that is secured to the outer DC ring 410 via one or more bolts 424.

In one embodiment, a diode pack is provided for a rotating rectifier assembly. The diode pack is configured to have two coaxial DC rings and radially stacked pairs of diodes disposed between the DC rings. By radially stacking diode pairs, as opposed to the traditional placement of adjacent along the rotor shaft of the rectifier assembly, the length of the diode pack can be reduced. In addition, the diode pack is configured to pass electrical signals through rotor shaft and incorporates diode package grounding similar to schemes described in patent U.S. Patent 8,063,522. In one embodiment, the configuration of the diode pack, specifically two co-axially located DC rings and three sets of radially stacked diodes, allows assembly with elimination of numerous fasteners, and reduced part count.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A diode pack (200;402) comprising:
an inner DC ring (204;414);
an outer DC ring (202;410);
a plurality of diodes (206;412) disposed between the inner DC ring (204;414) and the outer DC ring (202;410), wherein the plurality of diodes (206;412) are disposed in one or more radially stacked pairs;
one or more diode connection plates (226;412) disposed between each of the one or more radially stacked pair of diodes (206;412);
one or more DC posts (208;418) affixed to the inner DC ring (204;414);
one or more DC posts (208;418) affixed to the outer DC ring (202;414); and
one or more AC posts (210;416) affixed to the one or more diode connection plates (226;420).

2. The diode pack of claim 1 further comprising an insulator (212;426) disposed between the inner DC ring (204;414) and the outer DC ring (202;410).

3. The diode pack of claim 1 or 2 further comprising a ceramic resistor disk (214) disposed between the inner DC ring (204) and the outer DC ring (202).

4. The diode pack of any preceding claim further comprising one or more spring clips (222) disposed between the inner DC ring (204) and an inner diode (206) of the one or more radially stacked diode pairs.

5. The diode pack of any preceding claim further comprising a cover (216;422) affixed to the outer DC ring (202;410) by one or more bolts (220;424).

6. A rotating rectifier assembly (200;400) for a generator comprising:
a diode pack (200;400) of any preceding claim; and
a connection block (300;404) configured to receive the one or more DC posts (208;418) and one or more AC posts (210;416) and provide electrical connections to the diode pack (200;402).

7. The rotating rectifier assembly for a generator of claim 6, wherein the connection block (300;404) includes a plurality of terminals (304;406), wherein each of the plurality of terminals (304;406) is configured to receive one of the one or more DC posts (208;418) and one or more AC posts (210;416).

8. The rotating rectifier assembly for a generator of claim 7, wherein each of the plurality of terminals (304) includes a threaded portion (312) configured to receive a bolt to affix the connection block (300) to a rotating rotor shaft assembly and make electrical connections outside the shaft.
